(19) Europäisches Patentamt

European Patent Office

Office européen des brevets

(11) **EP 0 853 873 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(51) Int Cl.⁷: **A01G 1/06**

(21) Anmeldenummer: **97203707.1**

(22) Anmeldetag: **27.11.1997**

(54) **Anlage zum mechanischen Abtrennen von Stecklingen eines (Rosen)Pflanzenastes**

System for the mechanical separation of cuttings from plant branches, especially rose branches

Installation pour séparer mécaniquement des boutures à partir de branches de plantes, notamment de rosiers

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **04.12.1996 NL 1004687**

(43) Veröffentlichungstag der Anmeldung:
**22.07.1998 Patentblatt 1998/30**

(73) Patentinhaber: **Boomkwekerij Bert Rombouts B.V.**
**5527 JT Hapert (NL)**

(72) Erfinder:
• **Clerx, Henricus Petrus Maria**
**5991 PT Baarlo (NL)**
• **Lebbink, Gerrit Cornelis**
**5641 LA Eindhoven (NL)**
• **Rombouts, Norbert Johan Leonard**
**5527 JT Hapert (NL)**

(74) Vertreter: **Timmers, Cornelis Herman Johannes**
**Exter Polak & Charlouis B.V., P.O. Box 3241**
**2280 GE Rijswijk (NL)**

(56) Entgegenhaltungen:
**EP-A- 0 374 063        EP-A- 0 406 132**
**FR-A- 2 388 485**

**Beschreibung**

Die Erfindung bezieht sich auf eine Anlage zum mechanischen Abtrennen von Stecklingen eines Pflanzenastes.

Das mechanische Abtrennen von Pflanzen, insbesondere von Rosen, ist eine Bearbeitung, die bis jetzt noch nicht in zufriedenstellender Weise realisiert worden ist. Das mit Hilfe einer in einer festen Höhe angeordneten, länglichen, rotierenden, mit einzelnen Messern versehenen Schneidwalze in einer festen Höhe Abschneiden von darunter hindurchgeführten Rosenpflanzen wird in der Praxis bereits angewendet, jedoch das Verteilen eines Astes in eine Anzahl von einzelnen Stecklingen wird noch ausschließlich von Hand ausgeführt. Dieses Unterteilen muß sehr genau gemacht werden; Jeder endgültige Steckling sollte einen von einer Achsel ausgehenden Seitenast besitzen, mit dabei eine Länge von ± 3 mm über dieser Achsel, und eine Länge von ± 20 mm unter der Achsel. Dies konnte bis jetzt ausschließlich von Hand ausgeführt werden.

Der Erfindung liegt die Aufgabe zugrunde, eine Anlage zu schaffen, mit der diese Behandlung mechanisiert werden kann und erfindungsgemäß umfaßt eine derartige Anlage:

eine Förderbahn mit Trägern, mit der die jeweiligen Äste hängend entlang einer Anzahl von aufeinanderfolgenden Bearbeitungsstationen geführt werden, jeweils mit:
einer Bilderzeugungseinheit (VISION) zum Feststellen der Höhe hinsichtlich einer Bahnreferenz einer Achsel mit Seitenast und der Lieferung von diese Stelle repräsentierende Informationen; und
zumindestens einer in Höhenstand durch diese Informationen gesteuerte ersten und zweiten Scheroder Schneideeinheit in einem vorbestimmten ersten Abstand unter, beziehungsweise zweiten Abstand über der Astachsel Abtrennen eines Stecklings.

Eine Vorzugsausführungsform hiervon ist in Anspruch 2 beschrieben worden.

Überraschenderweise hat sich herausgesteld, daß eine, an sich bekannte, Bilderzeugungseinheit (VISION-Einheit) durch Analyse des in dieser geformten Bildes eines entlang dieser geführten Astes ausreichende und genaue Informationen liefern kann, um eine, in Bewegungsrichtung auf den entlanggeführten Ast, darauffolgende Scher- oder Schneideeinheit in der richtigen Höhe zu der Achsel einzustellen, um den Ast an zwei Stellen, zu der Achsel unter und über der Achsel, durchzuschneiden, so daß der endgültige Steckling an der richtigen Stelle abgetrennt wird und zugleich die richtige Form besitzt.

Vorzugsweise wird eine Ausführung, wie definiert in den Ansprüchen 3 und 4, verwendet. Mit den in diesen beschriebenen Maßnahmen wird erreicht, daß die zugeführten Äste alle in einer vorbestimmten Ausrichtung des Seitenastes der Scher-oder Schneideeinheit zugeführt werden, um so die Möglichkeit zu bieten, die Stecklinge durch die Scher- oder Schneideeinheit wieder in einer vorbestimmten Ausrichtung in einen Zuchttopf absenken zu lassen. Diese Ausrichtung wird dann während des darauffolgenden Transports eingehalten, so daß alle Stecklinge bei dem Heranwachsen gleich gerichtet sind und optimal mit Kunst- und Tageslicht bestrahlt werden können.

Die Genauigkeit des Zuführens in der vorbestimmten Lage wird noch durch die Anwendung der Maßnahmen nach Ansprüchen 5 und 6 verbessert.

Weitere Vorzugsausführungsformen sind in den Ansprüchen 7 und 8 beschrieben worden.

Zum Tragen und Führen der Scher- oder Schneideeinrichtung werden mit Vorteil die Maßnahmen nach Anspruch 9, bzw. 10 angewendet.

Bevorzugte Ausführungsformen einer Schereinheit sind in den Ansprüchen 11 und 12 beschrieben, während die Ansprüche 13 und 14 vorteilhafte Ausführungsformen einer in der Anlage anzuwendenden Zufuhrbahn für Zuchttöpfe beschreiben; Vorzugsausführungsformen eines Astträgers sind Gegenstand der Ansprüche 16 bis 18.

Das Schutzbegehren erstreckt sich weiter auf ein Verfahren zum mechanischen Abtrennen von Stecklingen eines zugeführten (Rosen)Astes, wie in den Ansprüchen 20 bis 23 definiert.

Bemerkt wird, daß aus der europäischen Anmeldung 0 406 132 ein Verfahren und eine Einrichtung zum Abschneiden von Weinranken bekannt ist, nach welcher diese Weinranken in Längsrichtung entlang einem optischen Detektor geführt werden, mit dem die Anwesenheit von Knospen festgesteld wird; mittels eines Steuer- und Schneidmechanismus wird die Weinranke dann in einem vorgegebenen, also festen, Abstand hinter jeder Knospe abgeschnitten.

Eine ähnliche Vorrichtung ist aus der europäischen Patentanmeldung 0 374 063 bekannt, mit dem Unterschied, daß nach dieser Schrift die Detektion der Knospen mechanisch mittels zwei zueinander bewegende Abtastleisten, zwischen denen die Weinranke hindurchgeführt wird, erfolgt.

Diese bekannten Vorrichtungen bieten keine Lösung für das der Erfindung zugrundeliegende Problem.

Die Erfindung wird anhand der Zeichnung erläutert. Dabei zeigen:

Fig. 1       eine schematische Darstellung eines Rosenastes, mit in dieser Darstellung die mit Hilfe der erfindungsgemäßen Vorrichtung abzutrennenden Stecklinge.

Fig. 2a und 2b     in Kombination eine komplette erfindungsgemäße Anlage;

| Fig. 3a | eine Vorderansicht eines in dieser Anlage angewendeten Astträgers; |
|---|---|
| Fig. 3b | eine Seitenansicht eines derartigen Astträgers; |
| Fig. 3c | eine Seitenansicht entsprechend Fig. 2 mit dem Astträger in dem hochgeklappten Stand gezeichnet; |
| Fig. 4 | eine schematische Draufsicht auf eine Anlage zum in die richtige Winkellage Einstellen eines von einem Astträger getragenen Astes; |
| Fig. 5 | eine Draufsicht auf eine in der erfindungsgemäßen Anlage angewendete Schereinheit; |
| Fig. 5b | eine Seitenansicht der Schereinheit; |
| Fig. 6a | eine weitere Seitenansicht einer derartigen Schereinheit in Verbindung mit einem zu bearbeitenden Rosenast; |
| Fig. 6b | eine Draufsicht auf eine derartige Schereinheit; und |
| Fig. 7 | einen Teil der Anlage nach Fig. 2b mit in dieser Anlage eine geänderte Ausführung der Führung der angewendeten Schereinheiten. |

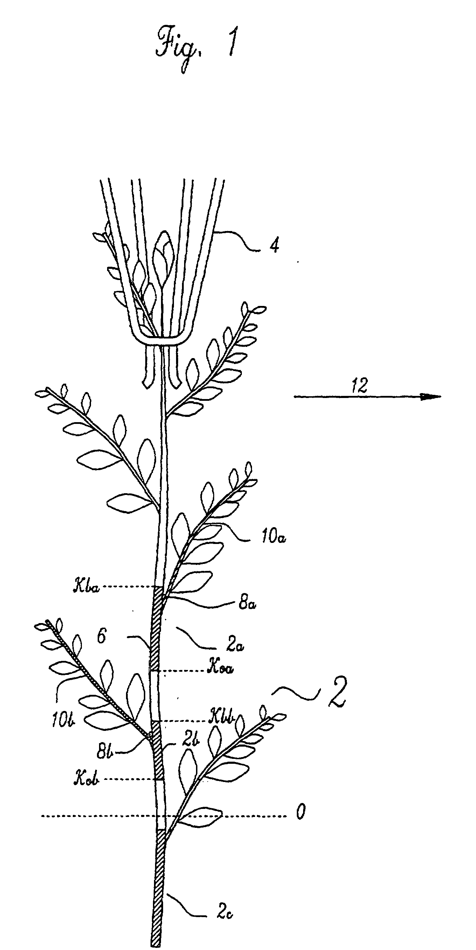

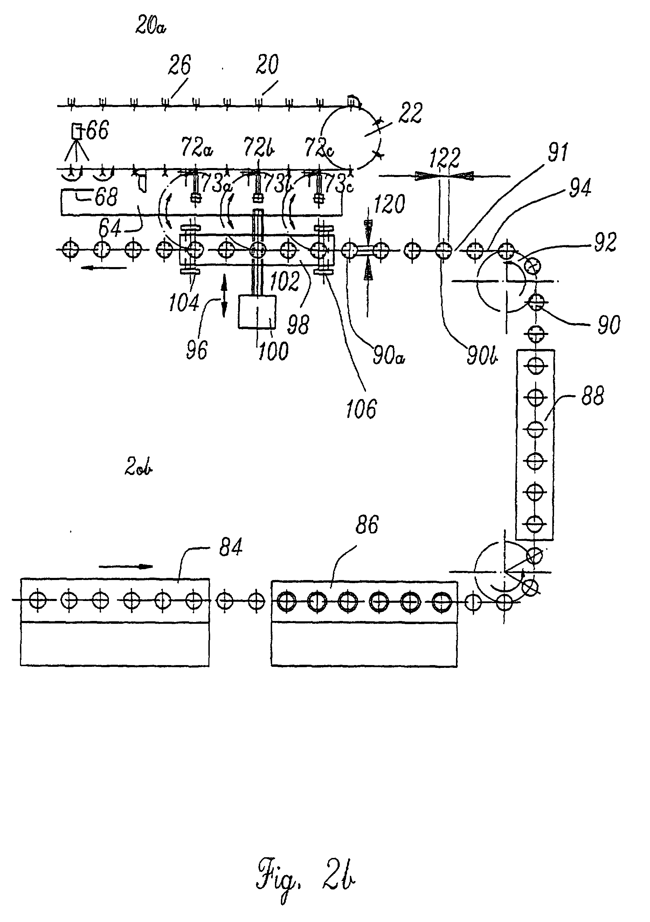

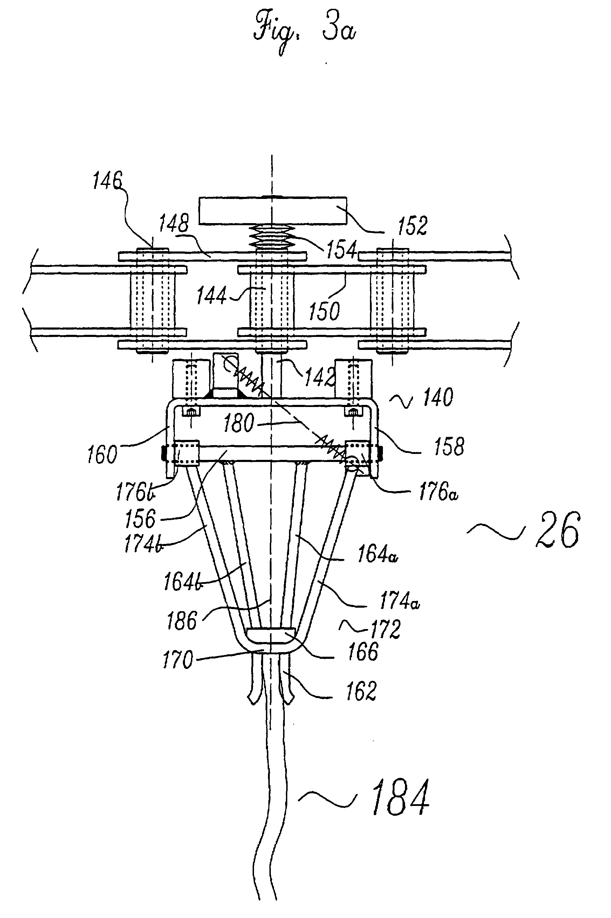

Die Figur 1 zeigt schematisch einen zu behandelnden Rosenast 2, festgeklemmt in einem teilweise und schematisch dargestellten, hängenden Astträger 4, der noch näher anhand der Fig. 3a - 3c beschrieben werden wird.

Der Ast hat drei potentiell brauchbare Stecklinge, mit 2a, 2b und 2c angedeutet. Jeder Steckling hat einen Stiel 6, eine Achsel 8, und einen von dieser Achsel ausgehenden Seitenast 10. Der Stiel 6 sollte an zwei Scherstellen von dem Ast abgeschnitten werden; die untere Scherstelle Ko, die ca. 20 mm unter der Achsel 8 liegt, und die obere Schnittstelle Kb, die 3 mm über der Achsel 8 liegt. Im allgemeinen sind die oberen Stecklinge, also die Stecklinge 2a und 2b, die besten und bei der Beschreibung der Funktion der erfindungsgemäßen Vorrichtung wird davon ausgegangen, daß ausschließlich die zwei oberen Stecklinge, 2b und 2a, für den Züchter interessant sind und für weitere Züchtung verwendet werden.

Dies impliziert, daß man, der Verarbeitung der zugeführten Äste vorangehend, anfangen kann, alle Äste auf dem Niveau O unter dem oberen Astende abzuschneiden. In einer darauffolgenden Station werden dann alle unteren Stecklinge 2b abgeschnitten, durch zunächst einzeln für jeden zugeführten Ast den unteren Schnitt Kob 20 mm unter der Achsel 8 auszuführen, und anschließend für jeden zugeführten Ast einzeln den oberen Schnitt Kbb 3 mm über der Achsel 8 auszuführen. Dies bedeutet, daß man, wenn der Schnitt auf Niveau 0 ausgeführt worden ist, von jedem Ast den genauen Höhenstand der unteren Achsel 8b bestimmen muß, um dieses Abschneiden in der richtigen Höhe unter und über dieser Achsel ausführen zu können.

Hierzu wird erfindungsgemäß die Anwendung einer Bildabtast- und Erkennungseinrichtung (VISION) vorgeschlagen, die die Stelle der Achsel bestimmt und Steuersignale für die Höheneinstellung der zwei unabhängig funktionierenden Schneideeinheiten liefert, die den unteren Schnitt an der Stelle Kob, beziehungsweise den oberen Schnitt an der Stelle Kbb ausführen müssen. Die dazu erforderliche Software ist im Auftrag der Anmelderin von der Firma ARIS BV in Eindhoven, Niederlanden entwickelt worden.

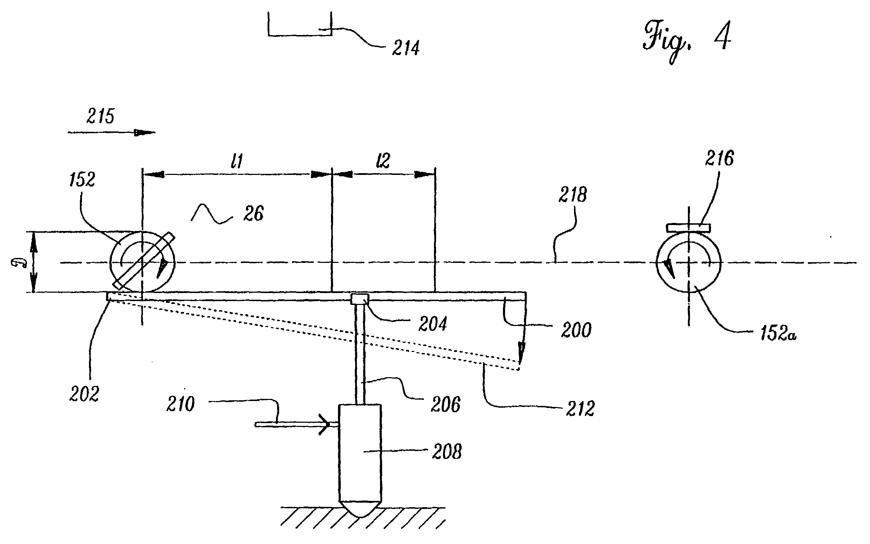

Während des Abtastens des Astes bei dessen Beförderung entlang der VISION-Einrichtung wird der Ast erfindungsgemäß um seine Längsachse herum rotiert - sieh Fig. 4 - so daß nicht nur die Achseln, sondern auch die Ausrichtung der jeweiligen Seitenäste wahrgenommen werden können; diese Rotation wird gestoppt, so bald der Seitenast des abzutrennenden Stecklings, also hier der Seitenast 10a des Stecklings 2a in die Verlagerungsrichting ausgerichtet ist. Wenn diese Verlagerungsrichting in der Fig. 1 nach rechts ist, also in Richtung auf den Pfeil 12, so hat der Seitenast 10a des Stecklings 2a die richtige Ausrichtung.

Das Anbringen des unteren Schnitts (Kob, Koa) ist eine relativ einfache Bearbeitung, weil der Rest des Astes dann noch an dem Träger 4 hängt, jedoch wird die Ausführung des oberen Schnitts (Kbb, Kba) kompliziert durch die Tatsache, daß bei dieser Bearbeitung gleichfalls der Steckling (2b, 2a) von dem Ast 2 abgetrennt wird; im Rahmen der erfindungsgemäßen Aufgabe - eine vollständige mechanische Be- und Verarbeitung der Stecklinge - ist vorgesehen, daß der nach dem Ausführen des oberen Schnitts dann von dem Ast abgetrennte Steckling einen definierten Stand behält, und mit einer Anzahl von anderen Stecklingen in einer bestimmten Position in einen Zuchttopf hineingestellt wird. Das Ausführen des oberen Schnitts Kb und Wegstellen des Stecklings nimmt denn auch mehr Zeit in Anspruch als das Ausführen des unteren Schnitts Ko; deshalb wird in jeder Bearbeitungsstation, in der ein Steckling abgetrennt wird, immer eine einzige Schereinheit für den unteren Schnitt Ko gefolgt von einer Anzahl von, zum Beispiel drei, sich gegenseitig gleichenden Schneideeinheiten zum Ausführen des oberen Schnitts und zum Wegstellen des abgeschnittenen Stecklings. Alle Schneideeinheiten werden von einer Zentralsteuerung, die Informationen von der zu der Station gehörigen VISION-Anlage erhält, und die "weiß", für welche Schneideeinheit die Informationen bestimmt sind, gesteuert.

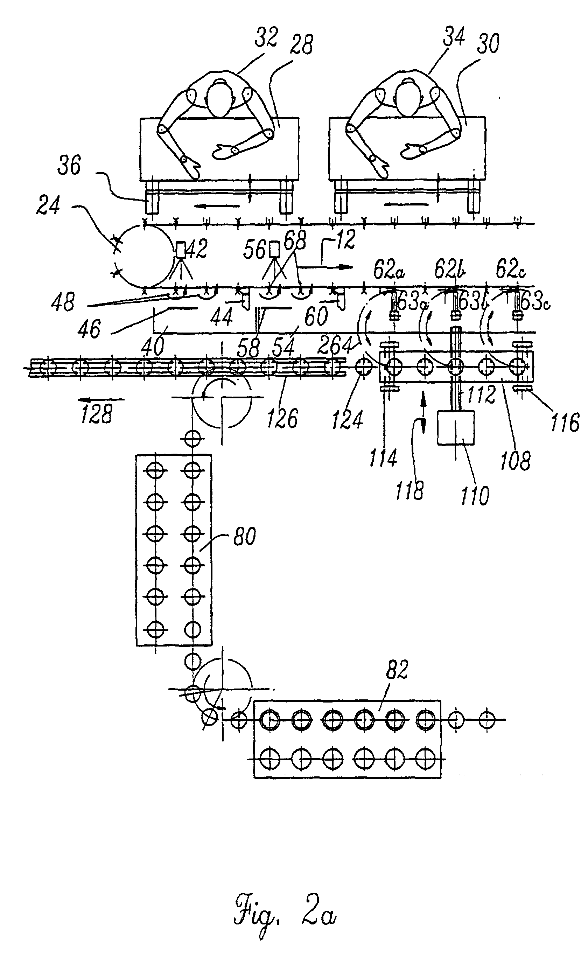

Die Fig. 2a und 2b zeigen in Kombination eine komplette erfindungsgemäße Anlage. Aufbau und Funktion werden nachstehend erläutert.

Diese Anlage umfaßt eine Förderbahn 20, in diesem Fall eine an sich bekannte, sogenannte "Hohlbolzenkette", die über das rechte Umkehrgetriebe 22 und das linke Umkehrgetriebe 24 geführt wird; die Fördergeschwindigkeit des Bandes beträgt in einer praktisch geprüften Ausführungsform ca. 20 cm pro Sek. Die Kettenbahn trägt fünfzig, in regelmäßigen Abständen verteilte, Astklemmen 26 (sieh Fig. 3a - 3c). Jede Astklemme hängt an einer Tragstange, die durch einen hohlen Bolzen der Kette hindurchgeht, und also um ihre Längsachse rotieren kann; jede Klemme kann zum Aufnehmen eines Astes geöffnet werden und kann dazu gleichfalls aus der senkrechten Ebene heraus in die horizontale Ebene gedreht werden.

An der in der Figur oberen Längsseite 20a der Kettenbahn 20 befinden sich zwei Arbeitstische 28, 30 an die die zu behandelnden Rosenäste zugeführt werden und von Personen 32, 34 einer ersten Inspektion unterworfen werden; ein für richtig befundener Ast wird in eine vorbeikommende, horizontal gedrehte Astklemme hineingelegt und dabei von dem vor den Tischen 28, 30 mitlaufenden Riemen 36 mitunterstützt; bei den Erreichen des linken Umkehrgetriebes 24 wird jede, mit einem Ast versehene Astklemme geschlossen und in den vertikalen Stand zurückgebracht.

An der anderen Längsseite 20b befinden sich drei Bearbeitungs(Scher)Stationen. Die erste Station 40 enthält die VISION-Kamera-Einheit 42 und die, in Höhe einstellbare, Schneideeinheit 44, mit der alle zugeführten Äste an der Stelle O unter der Spitze (sieh Fig. 1) abgeschnitten werden. Darauf folgen zwei miteinander identische Stationen 54 und 64, wo in jeweils einer ein Steckling von den zugeführten Ästen abgetrennt wird; zuerst der untere Steckling 2b in Station 54 und danach der Steckling 2a in Station 56. Die Äste werden rotierend entlang den abtastenden VISION-Kameras geführt; dies ist für Station 40 schematisch mit dem Längsstrich 46 und den Kreisbögen 48, 50 angegeben. Auch die Stationen 54, 64 haben eine VISION-Einheit 56, 66 mit Rotationseinheit 58, 68. Dann folgt in Station 54, bzw. 64 die Schereinheit 60, bzw. 70, die von den von der VISION-Einheit herkommenden Steuersignalen für jeden zugeführten Ast in einer solchen Weise in Höhe eingestellt wird, daß diese in einem Abstand von 20 mm unter der unteren Achsel abgeschnitten wird (sieh Fig. 1, Kob, Koa). Auf jede Schereinheit 60, 70 folgen drei jeweils gleiche, noch zu beschreibende Schereinheiten 62a, 62b, 62c, bzw. 72a, 72b, 72c, jeweils zum Abschneiden des Stecklings in einem Abstand von 3 mm über der Achsel (Fig. 1, Kbb, Kba) und zum in einen Zuchttopf Wegstellen des abgetrennten Stecklings. Die zentrale Steuereinheit, die Höheneinstellinformationen von den VISION-Einheiten 56, 66 erhält, steuert die jeweiligen Höheneinstellungen der Schneideeinheiten 62a - 62c, 72a - 72c.

Jede Schneideeinheit 62a - 62, bzw. 72a - 72e wird von einem in einer horizontalen Ebene um 180° verdrehbaren, in den Fig. 2a und 2e schematisch strichliniert angegebenen Schwenkarm 63a - 63e, bzw. 73a - 73e getragen. Die Steuerung seiner Bewegung erfolgt über die zentrale Steuereinrichtung.

Um die abgetrennten Stecklinge gleich ausgerichtet in Zuchttöpfe absenken zu können, ist vorzugsweise eine völlig mechanisierte Topfzufuhr vorgesehen. Es werden Töpfe mit einem Durchmesser von 105 mm, bzw. 130 mm verwendet; für jeden gibt es eine Topfaufsatzeinheit 80, bzw. 82. Weiter gibt es eine Topffülleinheit 84, 86, zum mit einer abgemessenen Humusmenge Abfüllen der 105 mm, bzw. 130 mm Töpfe. Für jeden gilt, daß in der angedrückten Erdmasse nach einem festen Muster eine Anzahl von, in diesem Fall vier, Löchern gestochen werden; dies erfolgt in der Löcherstecheinheit 88. Das Muster nach dem diese Löcher gestochen werden, sieht man in den, diese Einheit verlassende, Töpfen 90. Die Töpfe werden von einem flexiblen Zugband 91 mit nach oben herausragenden Mitnehmerstiften fortbewegt, die jeweils in einem Topf hineinragen und an denen Töpfe fortgezogen werden. Sie behalten also immer die gleiche Ausrichtung. Nach dem Durchlaufen der 90° Kurve 92 kommen die Töpfe auf eine gerade Führung 94; die Töpfe 90 verlassen die gerade Führung 94 (links in der Zeichnung) noch immer in dem gleichen Stand als der, den sie beim Einlaufen hatten. Diese Eigenschaft ist wichtig; mit der erfindungsgemäßen Vorrichtung ist es möglich, alle Stecklinge gleich ausgerichtet (also mit dem Seitenast in ein und dieselbe Richtung gerichtet) in die Töpfe zu stellen, und dadurch daß diese letzten ihre Ausrichtung behalten, wird es möglich, die jeweiligen Töpfe mit allen Stecklingen gleich ausgerichtet in Treibhäusern anzuordnen, so daß das einfallende Tageslicht optimal benutzt werden kann, bzw. eine optimale Kunstlichtbestrahlung möglich ist.

Damit jede Stecklingsabsenkeinrichtung jede der vier Einsteckstellen erreichen kann, ist es also notwendig, daß die jeweiligen Töpfe in eine Richtung quer zu der des Pfeiles 12 verlagerbar sind, wie mit den Querpfeilen 96 und 118 angegeben. Hierzu wird immer eine Anzahl von Töpfen (in diesem Fall 5) gleichzeitig über einen Träger 98 geführt, der über eine von einem Stellmotor angetriebene Spindel 102 in Richtung auf den Pfeil 96 über den festen Führungen 104, 106 hin- und herbewegt werden kann. Der Träger 98 befindet sich vor der Schneidestation 64; ein ähnlicher Träger 108 mit Stellmotor 110, Spindel 112, Führungen 114 und 116, und, in Richtung auf den Pfeil 118, hin- und herbeweglich befindet sich vor der Schneidestation 54. Das Zugband 91 kann ausreichend in diese Richtung nachgeben.

Es ist ersichtlich, daß der Schlag der Querverlagerung in Richtung auf die Pfeile 96, 118 dem Abstand in Querrichtung der vorgestochenen Löcher entspricht, wie mit 120 für den Topf 90a rechts vom Träger 98 angegeben; der Abstand in Längsrichtung zwischen den vorgestochenen Löchern, wie mit 122 für den Topf 90b angegeben, wird in einer Weise überbrückt, die nachfolgend bei der Beschreibung der Schneideeinheiten 62a - 62c, bezw. 72a, 72c erläutert werden wird. Die Verlagerung des Trägers 98, 108 wird in einer solchen Weise von der zentralen Steuereinheit gesteuert, daß, wenn die Töpfe den Träger 108 passiert haben, alle verfügbaren Stellen besetzt sind; die, jetzt aufgefüllten, Töpfe, wie der Topf 124, werden auf ein Paar Förderbänder 126 gestellt und in Richtung auf den Pfeil 138 abgeführt.

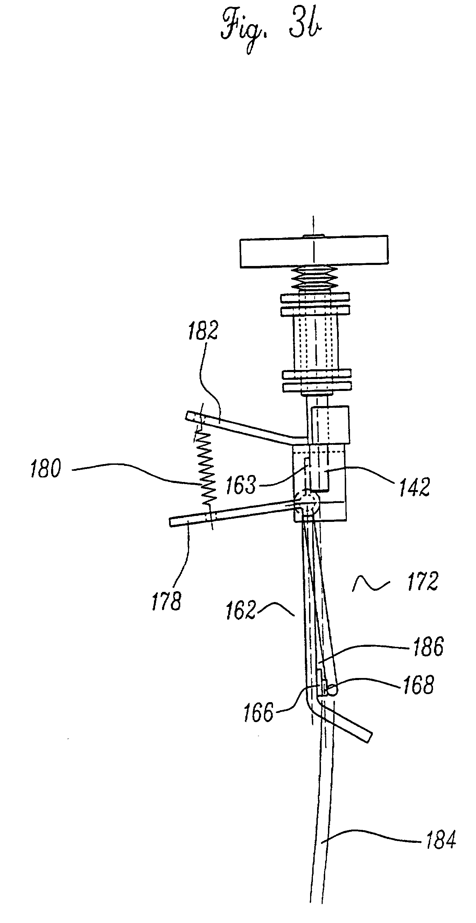

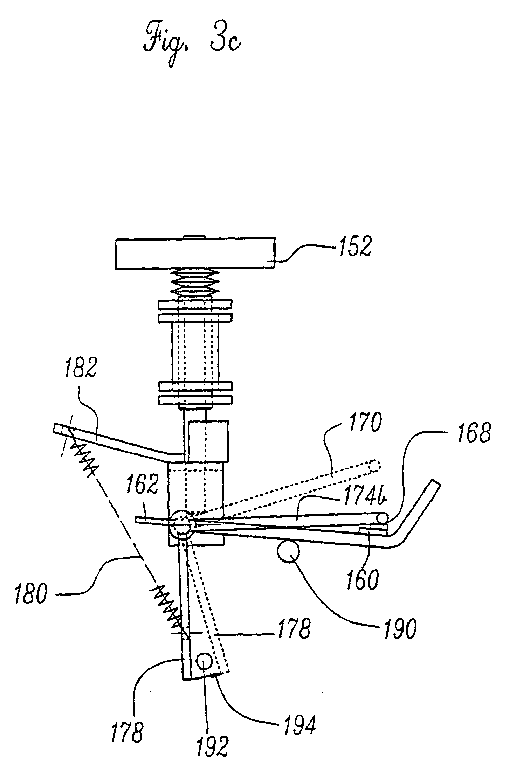

Es ist bereits erwähnt, daß die Astträger vorzugsweise um ihre vertikale Längsachse herum drehbar sein sollten. Ein geeigneter Träger ist in der Vorderansicht in Fig. 3a und in der Seitenansicht in den Fig. 3b und 3c gezeigt worden.

Der dargestellte Träger umfaßt einen fest an einer Tragstange 142 befestigten Bügel 140; die Tragstange ist drehbar durch eine Buchse 144 der hohlen Buchsenförderkette 146 mit Kettengliedern 148, 150 geführt worden. Am Ende der Tragstange 142 befindet sich das Ritzel 152, dessen Funktion noch näher erläutert werden wird. Zwischen Ritzel 152 und Kettenglied 148 ist eine Anzahl von Tellerfedern 154 angeordnet, womit erreicht wird, daß der Träger nicht willkürlich drehen kann.

Eine Querstange 156 ist drehbar in den kurzen Schenkeln 158, 160 des Bügels 140 gelagert und trägt einen Anschlag 163 (sieh Fig. 3b), der den vertikalen Stand des gabelförmigen unteren Bügels 162 mit den zwei Schenkeln 164a, 164b bestimmt, die an der Tragstange 156 befestigt sind, und die nahe dem unteren Ende durch den Streifen 166 mit einem Gummidruckstreifen 168 verbunden sind. Daran liegt der Querschenkel 170 des oberen Bügels 172 mit den Schenkeln 174a, 174b, die an den um die Stange 156 herum angeordneten Lagerbuchsen 176a, 176b befestigt sind. So können sowohl die Stangen 156, als auch die Buchsen 176a, 176b sich unabhängig voneinander und zu dem Bügel 140 drehen. Die Buchse 176a trägt außerdem eine Betätigungsstange 178; ein Zugfeder 180 ist zwischen dieser Betätigungsstange und dem Ende eines fest an dem Bügel 140 verbundenen Nockens 182 angeordnet. Die Zugfeder hält den oberen Bügel 172 normalerweise in dem in Fig. 3b gezeichneten Stand, also anliegend an dem Gummistreifen 168 und damit an dem unteren Bügel 162. Ein Ast, wie der strichliniert gezeichnete Ast 184, wird also mit den oberen Blättern zwischen dem Streifen 168 und dem Querschenkel 170 festgeklemmt.

Zum Einlegen eines Astes in den Träger wird über eine geeignete, ansteigende, entlang der Bahn angeordnete Führung 190, entlang welcher der untere Bügel 162 läuft, dieser Bügel hochgedrückt und in den Stand nach Fig. 3c gebracht. Dabei ist unter Einfluß der Feder 180 der Querschenkel 170 des oberen Bügels noch in Anlage mit dem Druckstreifen 168. Mittels einer zweiten Auflaufführung 192 (sieh Fig. 3c) kann die Betätigungsstange 178 jedoch nach rechts in Richtung auf den Pfeil 194 versetzt werden, wodurch der Querschenkel 170 von dem Druckstreifen 168 freikommt und eine Pflanze in den Träger hineingelegt werden kann. Wenn bei der weiteren Bewegung des Trägers dessen Teile zuerst von den Führungen 192 und dann von der Führung 190 freikommen, so wird der Träger sich zuerst schließen und anschließend in den in Fig. 3b gezeichneten Stand zurückkehren.

Die Fig. 4 zeigt in der Draufsicht das Prinzip der Anlage, das für das um einen bestimmten Winkel drehen des Astträgers verwendet wird, also die Rotationseinheit 48, 58, 68, wie bei den jeweiligen Stationen 40, 54 und 64 angewendet. Jede Einheit besteht aus einem Lineal 200, an dem linken Ende bei 202 gelenkig unterstützt und bei 204 mit der Kolbenstange 206 des pneumatischen Zylinders 208 mit Erregungsleitung 210 gekuppelt. Durch diesen pneumatischen Zylinder 208 kann das Lineal 200 aus dem vollausgezogenen Stand heraus in den strichlinierten Stand 212 gebracht werden, in dem das Ritzel 152 des Astträgers 26 nicht länger in Verbindung mit dem Lineal 200 ist, und die Rotationsbewegung des Astträgers 26, die bei dem Bewegen des Astträgers in Richtung auf den Pfeil 214 stattfindet, stoppt. Wenn sich der Astträger 26 über die Distanz $\ell$ 1 nach rechts verlagert hat, hat der Astträger eine vollständige Rotation vor der VISION-Kamera 214 zurückgelegt und ist der an diesem hängende Ast völlig abgetastet; zugleich ist noch eine Rotation über eine bestimmte Distanz, zum Beispiel die Distanz $\ell$ 2, erforderlich, um den Seitenast in die richtige Richtung, nämlich in die Richtung des Pfeiles 215 zu bringen. Das Kriterium, daß die VISION-Einheit dazu verwendet, ist das Wahrnehmen des maximalen Öffnungswinkels zwischen dem Seitenast und dem Hauptast; wenn dieses Kriterium erfüllt ist, wird der pneumatische Zylinder 208 über die Leitung 210 erregt und stoppt die Rotation des Astträgers 26. Faktisch "weiß" die Software erst, daß der maximale Öffnungswinkel erreicht ist, wenn der wahrgenommene Winkel sich wieder verringern wird, während weiter das ganze System eine gewisse Trägheit hat, wodurch der optimale Stand passiert wird, jedoch wird dies durch die Wirkung des zweiten, festen Hilfslineals 216, das sich zu dem Lineal 200 an der anderen Seite der Bahn 218 des Astträgers 26 befindet, aufgefangen. Wenn das Ritzel 152, wie mit 152a angegeben, sich entlang diesem Hilfslineal 216 bewegt, so wird der Astträger um einen bestimmten Winkel $\alpha$, von $\alpha = \frac{\ell}{\pi\Delta} \cdot 360°$ bestimmt, linksherum rotieren, und damit wird dieses "Durchschießen" kompensiert.

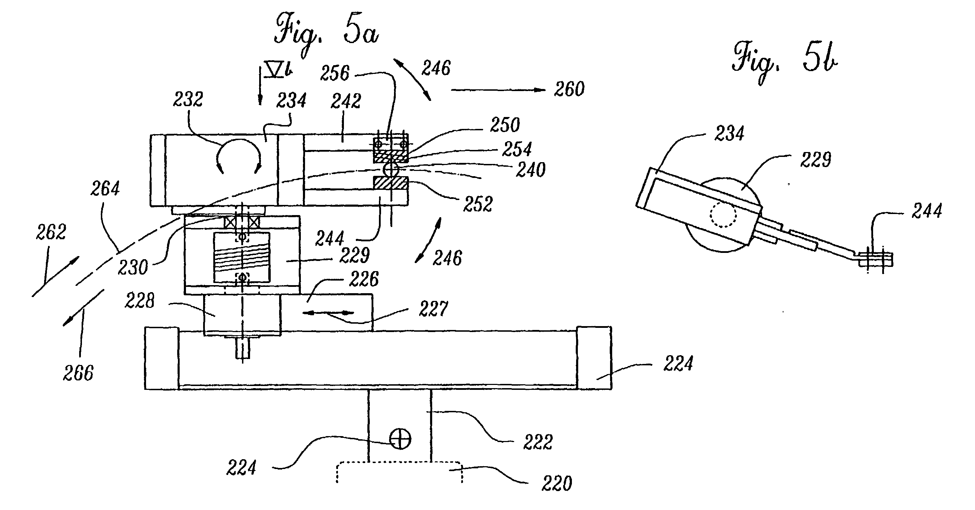

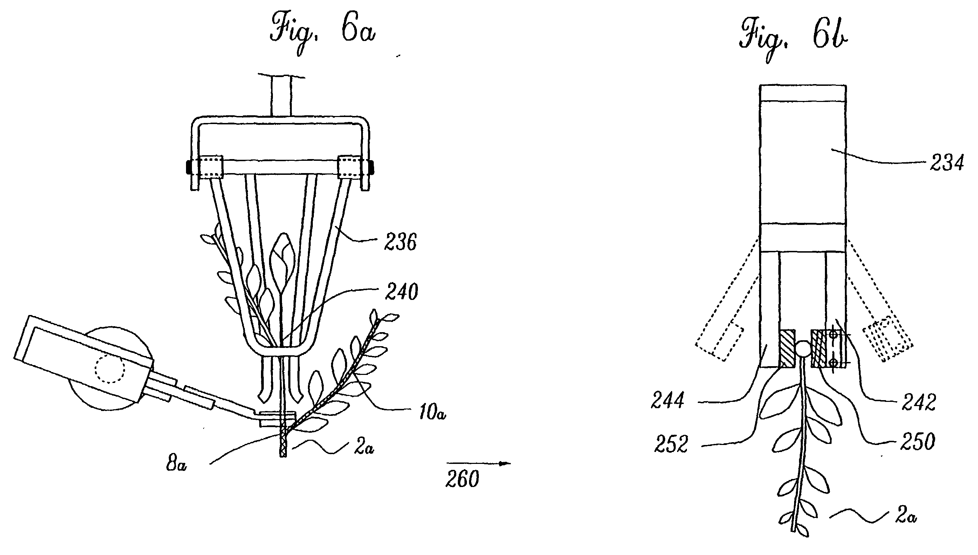

Die Fig. 5a zeigt in der Draufsicht und Fig. 5b in der Seitenansicht (in Richtung auf den Pfeil Vb) schematisch eine Ausführungsform einer Schereinheit, wie mit 62a - 62c, bzw. 72a - 72c in Fig. 2b angegeben. Diese Einheit ist also zum Ausführen eines Schnitts in einem Abstand von 3 mm über der Achsel zum Abtrennen und Erfassen des oberen Stecklings bestimmt, wie in Fig. 6a für den Steckling 2a mit der Achsel 8a und dem Seitenast 10a angegeben. Anschließend muß dieser Steckling um 180° an die Zufuhrbahn für Töpfe transportiert werden, um in einen der von dem Tisch 98, bzw. 108 getragene Zuchttöpfe abgesenkt zu werden.

Die Fig. 5a zeigt, wie eine derartige Schereinheit mit einem vertikalen Aktuator 220, der von der zentralen Steuereinrichtung gesteuert ist, aufgebaut ist, mit dem durch diese getragenen Träger 222, dessen Stand senkrecht zu der Zeichnungsebene einstellbar ist, wie symbolisch mit dem Kreuz 224 angedeutet. Der Träger 222 trägt einen linearen Aktuator 224 mit dem von diesem bedienten Träger 226, welcher in Richtung auf die Pfeile 227 in einer horizontalen Ebene hin- und herbeweglich ist; der Schlag des Aktuators 224 ist die Distanz, entlang welcher der Träger 226 beweglich ist, und entspricht zumindestens der Distanz 122 zwischen zwei Pflanzlöchern, angedeutet in Fig. 2b. Auch dieser Aktuator steht unter Einfluß der zentralen Steuereinrichtung.

Dieser Träger 226 trägt den Rotationszylinder 228 und dieser ist über die geringfügig flexible Kupplung 229 mit der ausgehenden Achse 230 verbunden, die also um einen bestimmten Winkel, mit den Pfeilen 232 angedeutet, einstellbar ist. Diese ausgehende Achse 230 trägt die faktische Schneideeinheit 234. Mittels der Rotation um die Achse 230 herum kann der Stand dieser Schereinheit 234 an einen etwaigen schrägen Stand des in dem Astträger 236 hängenden Astes 240 (sieh Fig. 6a) angepaßt werden. Im allgemeinen wird eine kliene Winkelverdrehung (z.B. um 30°) um die Vertikale ausreichend sein.

Die Schneideeinheit 234 weist die Schnittarme 242, 244 auf, die pneumatisch hin- und herbeweglich in Richtung auf die Pfeile 246, 248 sind; diese Scherbewegung wird von der zentralen Steuereinrichtung gesteuert.

Jeder der Arme 242, 244 trägt am Ende einen geringfügig nachgebenden Druckstreifen 250, 252; der Arm 242 trägt außerdem ein Schneidmesser, auswechselbar mit den Schrauben 256 arretiert. Die Äste, wie der Ast 240, werden in der in Fig. 6a gezeichneten Weise zugeführt, sich in Richtung auf den Pfeil 260 bewegend. Die Schneideeinrichtung bewegt sich gemäß der strichpunktierten gekrümmten Bahn 264 in Richtung auf den Pfeil 262 und überholt also den an dem Träger 236 hängenden Ast 240; im richtigen Moment, wenn der Ast 240 und die Arme 242, 244 den in der Figur 5 gezeichneten Stand erreicht haben (wahrgenommen mittels zum Beispiel eines geeigneten optischen Sensors) wird die Schereinheit 234 erregt und wird der Steckling 2a abgetrennt. Anschließend bewegt sich die Schereinheit um 180° zurück, also in Richtung auf den Pfeil 266, um den Steckling in einen sich in diesem Moment gegenüber der Schneideeinheit befindenden Zuchttopf abzusenken, wobei der Träger 226 gegebenenfalls eine Bewegung in Richtung auf die Pfeile 227 ausführt, um eine Anpassung an die Position der Pflanzlöcher zur Überbrückung der Distanz 122 zu erreichen.

Zugleich hat unter Einfluß der Zentralsteuerung jeder der Stellmotore 100, 110 den zugehörigen Träger 98, 118 in Richtung auf die Pfeile 96, 118 verlagert, um die richtige Pflanzlochreihe unter die Scherarme zu bringen (Überbrückung der Distanz 120).

In dem Vorhergehenden ist eine Ausführungsform beschrieben, in der jede Schereinheit 62a - 62c, 72a - 72c von einem um 180° um eine Vertikalachse und in einer Horizontalebene verdrehbaren Schwenkarm getragen wird. Die Folge davon ist, daß die Distanz zwischen der Scherposition und der Absenkpostion festliegt - diese wird ja von der Länge des betreffenden Schwenkarms bestimmt. Dies wiederum macht es notwendig, daß, wie in dem Vorhergehenden beschrieben, die zugeführten Zuchttöpfe in Richtung auf die Pfeile 96, bzw. 118 in Fig. 2b, bzw. 2a verlagert werden können.

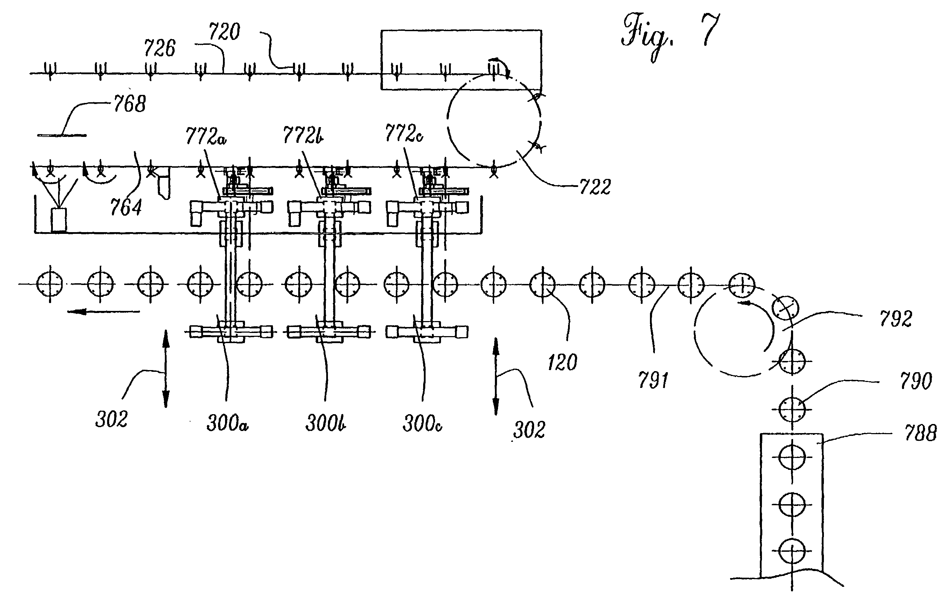

Fig. 7 zeigt einen Teil der Anlage gemäß Fig. 2b, in der eine andere Lösung gewählt worden ist. In dieser Figur sind Teile, welche denen entsprechen, die bereits in Fig. 2b gezeigt sind, mit einem entsprechenden Bezugszeichen, vorangegangen von der Ziffer 7, angedeutet. Fig. 7 zeigt drei Schereinheiten 772a - 772c, die hier jeweils nicht von einem Schwenkarm, sondern von den Längsführungen 300a, 300b, 300c getragen werden, entlang denen sie in Richtung auf die Pfeile 302 hin- und herbeweglich sind. Dies hat als Folge, daß die Zufuhrbahn 792 für die Töpfe nicht mehr in eine Richtung quer zu dieser Bahn einstellbar zu sein braucht, weil das Anpassen des Schlages der Schneideeinheiten 772a, 772c an die in der Figur mit 120 angedeutete Distanz in Querrichtung der Planzlöcher durch eine Anpassung des von jeder der Schneideeinheiten 772a - 772c in die Richtung quer zu der Zufuhrrichtung der Töpfe ausgeführten Schlags realisieret werden kann.

Die Ausführung gemäß Fig. 7 hat zu der gemäß den Fig. 2a, 2b den Vorteil, daß die Träger 98, 108 mit den damit zusammenwirkenden Führungen 104, 106, 114, 116 und den jeweiligen Antrieben wegfallen können, während zugleich die Zufuhrbahn für die Töpfe einfacher ausgeführt werden kann; diese bracht ja nicht mehr quer zu der Bewegungsrichtung einstellbar zu sein.

**Patentansprüche**

1. Anlage zum mechanischen Abtrennen von Stecklingen eines Planzenastes, **gekennzeichnet durch** eine Förderbahn mit Trägern, mit der die jeweiligen Äste hängend entlang einer Anzahl von aufeinanderfolgenden Bearbeitungsstationen geführt werden, jeweils mit:

   einer Bilderzeugungseinheit zum Feststellen der Höhe hinsichtlich einer Bahnreferenz einer Achsel mit Seitenast und der Lieferung von diese Stelle repräsentierende Informationen; und zumindestens einer in Höhenstand **durch** diese Informationen gesteuerte ersten und zweiten Scher- oder Schneideeinheit zum in einem vorbestimmten ersten Abstand unter, beziehungsweise zweiten Abstand über der Astachsel Abtrennen eines Stecklings.

2. Anlage nach Anspruch 1, **dadurch gekennzeichnet, daß** die Bilderzeugungseinheit zugleich Informationen über einen etwaigen Schiefstand des Astes zum Beistellen der Winkellage einer Scher- oder Schneideeinheit zu der Längsachse des Astes liefert.

3. Anlage nach Anspruch 2, **dadurch gekennzeichnet, daß** der Astträger um eine Vertikalachse rotierbar unterstützt ist und rotierend entlang der Bilderzeugungseinheit geführt wird, und der von der Bilderzeugungseinheit gesteuerte Rotationsantrieb den Ast in einen Stand versetzt, in dem das zu bearbeitende Astteil mit dem Seitenast eine bestimmte Ausrichtung zu der Transportrichtung hat.

4. Anlage nach Anspruch 3, **dadurch gekennzeichnet, daß** die VISION-Einheit ein die Astträgerrotation stoppendes Steuersignal liefert, wenn der von dieser wahrgenommene Winkel zwischen Ast und Seitenast einen maximalen Wert erreicht.

5. Anlage nach Anspruch 4, **dadurch gekennzeichnet, daß** der Astträger an dem unteren Ende einer Tragstange befestigd ist, deren oberen Ende ein Ritzel trägt, das entlang dem Rand eines Steuerlineals geführt ist, das durch Einfluß des VISION-Steuersignals außer Zusammenwirkung mit dem Ritzel gebracht werden kann.

6. Anlage nach Anspruch 5, **gekennzeichnet durch** ein Hilfslineal zum um einen festen Winkel Zurückdrehen des Astträgers, das in Bewegungsrichtung des Ritzels dem Steuerlineal folgt.

7. Anlage nach Ansprüchen 1 - 6, **dadurch gekennzeichnet, daß** die Astträger zu dem in dem Vertikalstand Tragen der Äste ausgelegt sind, und daß in Bahnbewegungsrichtung in einer Bearbeitungsstation eine erste Scher- und Schneideeinheit von zumindestens einer zweiten Scher- oder Schneideeinheit gefolgt wird.

8. Anlage nach einem der Ansprüche 1 - 7, **gekennzeichnet durch** eine in Bahnbewegungsrichtung vor den Bearbeitungsstationen angeordnete Vorscher- oder Schneideeinheit zum in einem bestimmten Abstand unter jedem Astträger Abtrennen des ganzen unteren Astteiles.

9. Anlage nach Ansprüchen 1 - 8, **dadurch gekennzeichnet, daß** eine Scher- oder Schneideeinheit zum in einem Abstand über der Achsel Abtrennen eines Stecklings von einem in einer horizontalen Ebene um etwa 180° beweglichen Schwenkarm getragen wird, dessen Ende eine erste Endlage nahe der Förderbahn, und eine zweite Endlage über einer Absenkposition hat, und einen Greifer zum Ergreifen eines abgetrennten Astes, beziehungsweise zum Absenken dieses Astes trägt.

10. Anlage nach Ansprüchen 1 - 8, **dadurch gekennzeichnet, daß** eine Scher- oder Schneideeinheit zum in einem Abstand über der Achsel Abtrennen eines Stecklings von einem in einer horizontalen Ebene entlang einer Geradführung hin- und herbeweglichen Träger getragen wird, welcher eine erste Endlage nahe der Förderbahn und eine zweite Endlage über einer Absenkposition hat und einen Greifer zum Ergreifen eines abgetrennten Stecklings, bzw. zum Absenken des Stecklings aufweist.

11. Anlage nach Ansprüchen 9 - 10, **dadurch gekennzeichnet, daß** eine Schereinheit zwei gesteuerte, zueinander bewegliche Scherarme mit an den jeweiligen Enden ein erstes Widerlager, beziehungsweise ein mit einer Schneidkante kombiniertes zweites Widerlager umfaßt, welche Arme von dem beweglichen Teil einer gesteuerten Längsführung getragen werden, deren festes Teil im wesentlichen quer zu der Armlängsrichtung daran befestigt ist.

12. Anlage nach Anspruch 10, **dadurch gekennzeichnet, daß** der Stand des festen Teiles um eine quer zu der Asttransportfläche liegende Drehachse gesteuert einstellbar ist.

13. Anlage nach Ansprüchen 9 - 12, **dadurch gekennzeichnet, daß** die Absenkposition über einer entlang der Förderbahn verlaufenden Zufuhrbahn für Töpfe liegt.

14. Anlage nach Ansprüchen 9 und 11 - 13, **dadurch gekennzeichnet, daß** die Zufuhrbahn für Töpfe eine Reihe längliche Topfträger umfaßt, auf denen die mit Zuchtmaterial gefüllten und mit nach einem vorbestimmten Muster vorgeformten Einsecköffnungen versehene Töpfe in einer zu der Förderbahn parallelen Reihe geordnet sind, und die in einem Abstand, welcher dem Querabstand der Einsecköffnungen entspricht, zu der Förderbahn einstellbar sind.

15. Anlage nach Ansprüchen 1 - 14, **dadurch gekennzeichnet, daß** die Trägerbahn zwei lange, im wesentlichen parallele Teile, die an den jeweiligen Enden durch ein halbkreisförmiges Führungsteil verbunden sind, umfaßt, mit an dem ersten langen Teil zumindestens eine Einlegestation zum in die Träger Einführen von Ästen und an dem dagegenüberliegenden langen Ende eine Reihe Bearbeitungsstationen.

16. Anlage nach Anspruch 15, **dadurch gekennzeichnet, daß** jeder Astträger in einer vertikalen Ebene um im wesentlichen 90° kippbar ist und mit zwei, zueinander um eine Horizontalachse herum bewegliche, zueinander unter Federspannung stehende Klemmteilen versehen ist, die mit entlang der Bahn angeordneten Steuermitteln zusammenwirken, mit denen der Träger am Anfang des ersten langen Bahnteils in einen horizontalen Stand, in dem die Klemmteile frei voneinander sind, versetzt wird.

17. Anlage nach Anspruch 16, **dadurch gekennzeichnet, daß** der Astträger einen an dem unteren Ende einer Tragstange angeordneten Tragbügel mit einer aus der Vertikalen drehbar darin unterstützten horizontalen Tragachse umfaßt, mit der ein Auflagerträger mit einem gabelförmigen Ende verbunden ist, und welche Tragachse drehbar die Enden eines U-förmigen Druckbügels, dessen Querschenkel mit dem Auflager zusammenfällt, aufnimmt, an den er unter Federwirkung angepreßt wird, und welcher Bügel über einen durch diese getragenen Bedienungsnocken außer Angriff an dem Auflager angeordnet werden kann.

18. Anlage nach Anspruch 17, **dadurch gekennzeichnet, daß** Auflagerträger und Bedienungsnocken mit entlang der Trägerbahn angeordneten Führungen zusammenwirken, die den Auflagerträger während der Bewegung des Astträgers in eine horizontale Ebene bringen und den Druckbügel von diesem hinwegbewegen.

19. Anlage nach Ansprüchen 15 - 18, **dadurch gekennzeichnet, daß** vor jeder Einlegestation ein in Bahnbewegungsrichtung angetriebener, mit der Bahn paralleler Auflageriemen angeordnet ist.

20. Verfahren zum mittels eines in einer Bezugshöhe angeordneten Bilderzeugunseinheit Abtasten eines in einer im wesentlichen vertikalen Stand an dieser entlanggeführten Astes mit zumindestens einem, von einer Achsel ausgehenden Seitenast zum mittels einer Scher- oder Schneideeinrichtung in vorbestimmten Abständen unter, bzw. über dieser Achsel Durchschneiden des Astes, wobei man den Ast während des Entlangführens eine Rotationbewegung in eine erste Richtung um die Längsachse herum ausführen läßt, während dieses Entlangführens eine Anzahl von aufeinanderfolgenden Bilder erzeugt, diese Bilder analysiert und aus dieser Analyse die Distanz zwischen der betreffenden Achsel zu der Bezugshöhe ableitet.

21. Verfahren nach Anspruch 20, bei dem man aus der Analyse der Bilder den Maximalwert des Öffnungswinkels zwischen dem Seitenast und dem Mutterast, projiziert auf eine in die Bewegungsrichtung liegende Fläche, ableitet und die Rotation des Astes einstellt, wenn das Erreichen des Maximalwertes festgestellt ist.

22. Verfahren nach Anspruch 21, bei dem man nach dem Stoppen der Astrotation den Ast um einen bestimmten Winkel in eine zweite, der ersten entgegengesetzten, Richtung zurückdreht.

23. Verfahren nach Ansprüchen 21 - 22, **dadurch gekennzeichnet, daß** man während der Abtastung des Astes dessen Schiefstand zu der Vertikalen bestimmt, und den Stand der Scher- oder Schneideeinrichtung zu der Vertikalen dementsprechend anpaßt.

**Claims**

1. System for the mechanical separation of cuttings from plant branches, **characterised by**
   a conveyor track with carriers by which the branches are moved, hanging, along a plurality of successive processing stations, each station having:

   an imaging unit to detect the height with respect to a track reference of an axil with lateral branch and to supply information representing this position; and
   at least one first and second clipping or cutting unit, the level of which is controlled by this information, for separating a cutting respectively at a predetermined first distance below and at a second distance above the branch axil.

2. System according to Claim 1, **characterised in that** the image generating unit at the same time supplies information on a possible oblique position of the branch for determining the angular position of a clipping or cutting unit with respect to the longitudinal axis of the branch.

3. System according to Claim 2, **characterised in that** the branch carrier is supported rotatably about a vertical axis and is moved, while rotating along the image generating unit, and the rotary drive controlled by the image generating unit moves the branch into a position in which the part of the branch to be processed with its lateral branch has a particular alignment with respect to the direction of transportation.

4. System according to Claim 3, **characterised in that** the image generating unit supplies a control signal stopping the rotation of the branch carrier when the angle between branch and lateral branch detected by said imaging unit reaches a maximum value.

5. System according to Claim 4, **characterised in that** the branch carrier is fixed at its lower end to a carrier rod, the upper end of which carries a pinion which is guided along the edge of a control rail which through the influence of the control signal from the imaging unit can be moved out of engagement with the pinion.

6. System according to Claim 5, **characterised by** an auxiliary control rail for rotating back the branch carrier through a fixed angle, which follows the control rail in the direction of movement of the pinion.

7. System according to Claims 1 - 6, **characterised in that** the branch carriers are designed to carry the branches in the vertical position, and **in that** at a processing station a first clipping and cutting unit is followed by at least a second clipping or cutting unit in the direction of movement of the track.

8. System according to one of Claims 1 - 7, **characterised by** a pre-clipping or pre-cutting unit arranged before the processing stations in the direction of movement of the track for separating the entire lower part of the branch at a certain distance below each branch carrier.

9. System according to Claims 1 - 8, **characterised in that** a clipping or cutting unit for separating a cutting at a distance above the axil is carried by a pivoted arm movable through approximately 180° in a horizontal plane, the end of which arm has a first end position close to the conveyor track and a second end position above a lowering position, and a grip for gripping a separated branch and for lowering this branch.

10. System according to Claims 1 - 8, **characterised in that** a clipping or cutting unit for separating a cutting at a distance above the axil is carried by a carrier able to reciprocate in a horizontal plane along a straight guide, which carrier has a first end position close to the conveyor track and a second end position above a lowering position, and a grip for gripping a separated branch and for lowering this branch.

11. System according to Claims 9 - 10, **characterised in that** a clipping unit comprises two controlled cutting arms movable with respect to each other with at their respective ends a first abutment element and a second abutment element combined with a cutting edge, which arms are carried by the movable part of a controlled longitudinal guide the fixed part of which is fixed to it substantially transversely to the longitudinal direction of the arms.

12. System according to Claim 10, **characterised in that** the position of the fixed part is controlledly adjustable about an axis of rotation located perpendicularly to the branch-transporting plane.

13. System according to Claims 9 - 12, **characterised in that** the lowering position is located above a feed track for pots running along the conveyor track.

14. System according to Claims 9 and 11 - 13, **characterised in that** the feed track for pots comprises a series of rectangular pot carriers on which the pots filled with cultivating material and provided with preformed insertion apertures according to a predetermined pattern are arranged in a row parallel to the conveyor track, and which are adjustable with respect to the conveyor track over a distance corresponding to the transverse distance between the insertion apertures.

15. System according to Claims 1 - 14, **characterised in that** the carrier track comprises two long, substantially parallel sections which are connected at their respective ends by semicircular guide sections, with at least one insertion station for inserting branches into the carriers on the first long section, and a series of processing stations on the long section located opposite.

16. System according to Claim 15, **characterised in that** each branch carrier is inclinable through substantially 90° in a vertical plane and is provided with two clamping parts movable with respect to each other about a horizontal axis and spring-loaded towards each other, which clamping parts co-operate with control means arranged along the track, by which control means the carrier is moved into a horizontal position in which the clamping parts are free of each other at the start of the first long track section.

17. System according to Claim 16, **characterised in that** the branch carrier comprises, arranged at the lower end of a carrier rod, a carrier yoke with a horizontal carrier axle rotatable out of the vertical and supported in said carrier yoke, with which axle an abutment element carrier with a stirrup-shaped end is connected, and which carrier axle rotatably receives the ends of a U-shaped pressure yoke the transverse member of which coincides with the abutment element, against which it is pressed by spring action, and which pressure yoke can be arranged out of engagement with the abutment element by means of an operating lever carried by said yoke.

**18.** System according to Claim 17, **characterised in that** abutment element carrier and operating lever co-operate with guides arranged along the conveyor track, which guides move the abutment element carrier into a horizontal plane during the movement of the branch carrier and move the pressure yoke away from said abutment element carrier.

**19.** System according to Claims 15 - 18, **characterised in that** a supporting belt driven in the direction of movement of the track and parallel to the track is arranged in front of each insertion station.

**20.** Method of scanning, by means of an imaging unit arranged at a reference level, a branch moved along said image generating unit in a substantially vertical position, said branch having at least one lateral branch issuing from an axil, for severing said branch by means of a clipping or cutting device at predetermined distances below and above this axil, the branch being rotated in a first direction about its longitudinal axis while moving along the image generating unit, a plurality of successive images being generated during this movement, said images being analysed and the distance between the axil concerned and the reference level being derived from this analysis.

**21.** Method according to Claim 20, in which the maximum value of the included angle between the lateral branch and the main stem, projected on a surface located in the direction of motion, is derived from the analysis of the images and the rotation of the branch is stopped when attainment of the maximum value is detected.

**22.** Method according to Claim 21 in which, after stopping of the rotation of the branch, the branch is rotated back through a certain angle in a second direction opposite to the first.

**23.** Method according to Claims 21 - 22, **characterised in that** during scanning of the branch its oblique position with respect to the vertical is determined and the position of the clipping or cutting device in relation to the vertical is adapted correspondingly.

**Revendications**

**1.** Installation de séparation mécanique des plans ou boutures d'une branche de plantes **caractérisée par** :

- une piste de transport avec des supports, à l'aide de laquelle les branches respectives sont guidées accrochées le long d'une pluralité de postes de transformation successifs, chaque fois comportant :

- une unité de génération d'image pour constater la hauteur par rapport à une référence de piste d'une aisselle avec une ramification latérale et la fourniture d'informations représentatives de cet emplacement ; et
- au moins une première et une deuxième unité de cisaillement ou de découpage dont la position en hauteur est commandée à l'aide de ces informations, pour procéder à la séparation d'une bouture avec un premier espacement prédéterminé en dessous, respectivement d'un deuxième espacement en dessus de l'aisselle de branche.

**2.** Installation selon la revendication 1, **caractérisée en ce que** l'unité de génération d'image fournit en même temps des informations concernant un éventuel dressage oblique de la branche lors de la fixation de la position angulaire d'une unité de cisaillement ou de découpage par rapport à l'axe longitudinal de la branche.

**3.** Installation selon la revendication 2, **caractérisée en ce que** le support de branche est soutenu de façon à pouvoir tourner autour d'un axe vertical et est guidé de façon à pouvoir tourner le long de l'unité de génération d'image, et l'entraînement en rotation, commandé par l'unité de génération d'image, déplaçant la branche en une position à laquelle la partie de branche à travailler, avec la branche latérale, a une orientation déterminée par rapport à la direction de transport.

**4.** Installation selon la revendication 3, **caractérisée en ce que** l'unité de génération d'image fournit un signal de commande qui fait cesser la rotation du support de branche lorsque l'angle pris par celui-ci, entre la branche et la branche latérale, atteint une valeur maximale.

**5.** Installation selon la revendication 4, **caractérisée en ce que** le support de branche est fixé sur l'extrémité inférieure d'une tige support, dont l'extrémité supérieure porte un pignon guidé le long du bord de la règle de commande, qui peut être placée hors de coopération avec le pignon par l'influence du signal de commande de l'unité de génération d'image.

**6.** Installation selon la revendication 5, **caractérisée par** une règle auxiliaire pour effectuer une rotation inverse d'un angle fixe du support de branche, qui suit la règle de commande dans la direction de déplacement du pignon.

7.   Installation selon les revendications 1 à 6, **caractérisée en ce que** les supports de branche sont conçus pour porter les branches en position verticale et **en ce que**, dans la direction de déplacement de la piste en un poste de transformation, une première unité de cisaillement et de découpage est suivie par au moins une deuxième unité de cisaillement ou de découpage.

8.   Installation selon l'une des revendications 1 à 7, **caractérisée par** une unité de précisaillement ou de découpage, disposée en amont des postes de transformation en observant dans la direction de déplacement de la piste, pour procéder à une séparation sous un espacement déterminé, sous chaque support de branche, de la totalité de la partie de branche inférieure.

9.   Installation selon les revendications 1 à 8, **caractérisée en ce qu'**une unité de cisaillement ou de découpage, prévue pour effectuer la séparation sous un espacement, au-dessus de l'aisselle d'une bouture, est portée par un bras pivotant mobile dans un plan horizontal, sur environ 180°, bras pivotant dont l'extrémité présente une première position finale, proche de la piste de transport, et une deuxième position finale, au-dessus d'une position d'abaissement, et porte un organe de préhension, devant saisir une branche séparée, ou abaisser cette branche.

10.  Installation selon les revendications 1 à 8, **caractérisée en ce qu'**une unité de cisaillement ou de découpage, prévue pour effectuer une séparation sous un espacement au-dessus de l'aisselle d'une bouture, est portée par un support, déplaçable dans un sens et dans l'autre le long d'un guidage rectiligne dans un plan horizontal, support qui a une première position finale, proche de la piste de transport, et une deuxième position finale, au-dessus d'une position d'abaissement, et présente un organe de préhension pour saisir une bouture séparée ou bien pour abaisser la bouture.

11.  Installation selon les revendications 9 à 10, **caractérisée en ce qu'**une unité de cisaillement comprend deux bras de cisaillement commandés, mobiles l'un par rapport à l'autre, avec, aux extrémités respectives, un premier contre appui, respectivement un deuxième contre appui combiné avec une arête de découpage, les bras étant portés par la partie mobile d'un guidage longitudinal commandé, dont la partie fixe est fixée sensiblement transversalement par rapport à la direction longitudinale des bras.

12.  Installation selon la revendication 10, **caractérisée en ce que** la posture de la partie fixe est réglable de façon commandée autour d'un axe de rotation situé transversalement par rapport à la surface de transport de branche.

13.  Installation selon les revendications 9 à 12, **caractérisée en ce que** la position d'abaissement est située au-dessus d'une bande d'amenée de pots, s'étendant le long de la piste de transport.

14.  Installation selon les revendications 9 et 11 à 13, **caractérisée en ce que** la piste d'amenée pour les pots comprend une rangée de support de pots allongés, sur lesquels les pots, remplis de matériau d'élevage et munis d'ouvertures d'enfichage préformées selon un motif prédéterminé, sont disposés en une rangée parallèle à la piste de transport et sont réglables par rapport à la piste de transport, sous un espacement qui correspond à l'espacement transversal des ouvertures d'enfichage.

15.  Installation selon les revendications 1 à 14, **caractérisée en ce que** la piste de transport comprend deux parties longues sensiblement parallèles, reliées aux extrémités respectives par une partie de guidage en forme de demi-cercle, avec, sur la première partie longue au moins un poste d'insertion pour insérer dans les supports des branches et, sur l'extrémité longue, placée en regard, une rangée de postes de transformation.

16.  Installation selon la revendication 15, **caractérisée en ce que** chaque support de branche est susceptible de basculer dans un plan vertical d'un angle de pratiquement de 90° et est muni de deux parties de serrage, mobiles l'une par rapport à l'autre autour d'un axe horizontal, placées l'une par rapport à l'autre sous une contrainte élastique, parties de serrage qui coopèrent avec des moyens de commande disposés le long de la piste, à l'aide desquels le support au début de la première partie de piste longue est placé en posture horizontale, sous laquelle les parties de serrage sont libres l'une par rapport à l'autre.

17.  Installation selon la revendication 16, **caractérisée en ce que** le support de branche comprend un étrier support disposé à l'extrémité inférieure d'une tige support, avec un axe support horizontal y étant soutenu de façon à pouvoir tourner par rapport à la verticale, auquel un support de pose est relié à une extrémité en forme de fourche et cet axe support supportant, avec une possibilité de rotation, les extrémités d'un étrier de pression en forme de U, dont la branche transversale coïncide avec l'élément de pose, sur lequel il est pressé par un effet élastique, et l'étrier pouvant être disposé hors de prise sur l'élément de pose, au moyen d'une came de manoeuvre portée par cet étrier.

**18.** Installation selon la revendication 17, **caractérisée en ce que** le support de pose et la came de manoeuvre coopèrent avec des guidages disposés le long de la piste support, guidages qui placent le support de pose, pendant le déplacement du support de branche, en un plan horizontal et écartent l'étrier de pressage de celui-ci.

**19.** Installation selon les revendications 15 à 18, **caractérisée en ce qu'**avant chaque poste d'insertion est disposée une courroie de pose, entraînée dans la direction de déplacement de la piste, parallèle à la piste.

**20.** Procédé de reconnaissance au moyen d'une unité de génération d'image, disposée à une hauteur de référence, d'une branche soumis à un guidage longitudinal sur celle-ci sous une posture sensiblement verticale, avec au moins une branche latérale partant d'une aisselle, pour procéder à un découpage de la branche à l'aide d'un dispositif de cisaillement ou de découpage sous des espacements prédéterminés au-dessous ou au-dessus de cette aisselle, sachant que, pendant le guidage, un mouvement de rotation peut être effectué par la branche dans une première direction autour de l'axe longitudinal, une pluralité d'images successives étant générée pendant ce guidage, ces images étant analysées et la distance entre l'aisselle concernée et la hauteur de référence étant dérivée de cette analyse.

**21.** Procédé selon la revendication 20, pour lequel, à partir de l'analyse des images, on déduit la valeur maximale de l'angle d'ouverture entre la branche latérale et la branche mère, projetée sur une surface placée dans la direction de déplacement, et on règle la rotation de la branche lorsque l'atteinte de la valeur maximale est constatée.

**22.** Procédé selon la revendication 21, pour lequel, après avoir fait cesser la rotation de la branche, on ramène la branche, par rotation d'un angle déterminé, en une deuxième direction opposée à la première.

**23.** Procédé selon les revendications 21 à 22, **caractérisé en ce que** pendant une exploration de la branche, on détermine l'obliquité de sa posture par rapport à la verticale et on adapte, de manière correspondante, la posture du dispositif de cisaillement ou de découpage par rapport à la verticale.

Fig. 1

Fig. 2a

*Fig. 2b*

Fig. 3a

Fig. 3b

Fig. 3c

Fig. 4

Fig. 5a

Fig. 5b

EP 0 853 873 B1

Fig. 6a

Fig. 6b

236

240

10a

2a

8a

260

234

244

242

252

250

2a

Fig. 7